# EUROPÄISCHE PATENTANMELDUNG

(11) **EP 3 656 225 A1**
(43) Veröffentlichungstag der Anmeldung: **27.05.2020**
(21) Anmeldenummer: 19203277.9
(22) Anmeldetag: 15.10.2019
(51) Int. Cl.: A23N 15/00

(54) **BOHRER ZUM ENTFERNEN EINES STRUNKS BEI GEMÜSE**

(30) Priorität: 21.11.2018 DE 102018129368
(71) Anmelder: Speckmann, Henning, 32351 Stemwede (DE)
(72) Erfinder: Speckmann, Henning, 32351 Stemwede (DE)
(74) Vertreter: von Pinkowski, Elisabeth

(57) **Zusammenfassung**

Die Erfindung betrifft einen Bohrer (1) zum Entfernen eines Strunks bei Gemüse, welcher eine konische Form besitzt und innen hohl ist. Der Bohrer (1) besitzt mindestens zwei Schneideblätter (3) mit Schneiden (4), die jeweils sowohl an der Zentrierspitze (2) als auch an der Bodenplatte (7) befestigt sind.

## Beschreibung

Die Erfindung betrifft einen Bohrer zum Entfernen eines Strunks bei Gemüse.

Der Strunk (die Sprossachse) bezeichnet in der Botanik eines der drei Grundorgane der Pflanzen mit Kormus(veraltet: Kormophyten). Sie verbindet die der Ernährung dienenden anderen beiden Grundorgane Wurzel und Blatt miteinander in beiden Richtungen. Die Sprossachse trägt das Blätterdach und bewegt dieses möglichst günstig zu dessen Umweltbedingungen. Sie ist ein Organ, das sich im Zuge des Landgangs der Pflanzen entwickelt hat. Es dient der Stabilisierung, der Speicherung sowie als Transportorgan für Wasser, Nährstoffe und Assimilate. Je nach Ausprägung nennt man die Sprossachse auch Schaft, Halm, Stängel oder Stamm oder Strunk.

Zu den Strunkfrüchten bzw. Knollenfrüchten gehören beispielsweise Kohlgemüse, Sellerie, Rüben etc.. Bei der industriellen Verarbeitung von beispielsweise Weißkohl zu Sauerkraut, ist es bekannt, vor dem Zerschneiden des Kohls in deren Strünke mit einem Bohrer auf Bohrmaschinen mit selbsttätiger Links- und Rechtsbewegung des Bohrers schraubenartig hineinzubohren. Sobald der Bohrer die Spitze des Strunkes erreicht hat, wird die Drehrichtung des Bohrers mittels des antreibenden Motors umgeschaltet, und der Bohrer wird wieder aus dem Strunk herausbewegt. Dadurch soll verhindert werden, dass sich bei der nachfolgenden Zerkleinerung des Kohls in dem fertigen Produkt, beispielsweise im Sauerkraut, für den Verbraucher erkennbare Strunkteile befinden.

Bekannt sind nach DE 868533C Verfahren und Vorrichtung zum Entfernen des Weißkohl-Strunkes, bei denen Kohlköpfe in Halterungen eines Transportbandes unter eine Bohrvorrichtung gebracht werden, um den Strunk herauszubohren.
In der DE 868534C wird eine Vorrichtung zum Entfernen des Strunkes aus Weißkohlköpfen mittels eines maschinell angetriebenen Bohrers, welcher mit einem Wendegetriebe ausgestattet ist.
Außerdem ist mittels der DE1154968B eine Vorrichtung veröffentlicht worden, bei der die Kohlköpfe in einen drehbaren Rundtisch vor dem Ausbohren des Strunkes eingelegt und danach wieder herausgenommen werden.
Bekannt ist nach DE441201C auch ein Bohrer mit Messerflügeln, der zur Entfernung eines Strunks eingesetzt wird.
Die EP1284105A1 beschreibt ein Verfahren zum Entfernen des Strunkes von Kohlköpfen, bei dem der Strunk nach dem Herausschneiden mittels einer Greifvorrichtung entfernt wird.

Die bekannten Vorrichtungen und Verfahren beschreiben Möglichkeiten, mit herkömmlichen Bohrern industriell die Strünke aus Gemüse, insbesondere Kohlköpfen, zu entfernen. Ein Bohrer mit Messerflügeln entfernt zwar grob einen Strunk eines Kohlkopfes, passt sich aber nicht der natürlichen Form des Strunkes eines Kohlkopfes an, der konisch zur Spitze eines Kohlkopfes zuläuft. Dadurch werden vom Kohl mit gerade in der Nähe des Strunkes auch die sich befindenden schmackhaften Teile bzw. Blätter entfernt, oder ist der Flügelbohrer zu klein, wird der Strunk nicht komplett entfernt.

Es bestand daher die Aufgabe, einen Bohrer zu finden, der nicht die genannten Nachteile der bekannten Bohrer aufweist, und einen Bohrer zur Verfügung zu stellen, der die natürliche Form eines Strunks besitzt, um diesen herauszubohren und überdies nicht die Blätter in der unmittelbaren Nähe des Strunkes beschädigt.
Darüber hinaus soll der Bohrer Kosten bei der Entfernung des Strunkes einsparen. Zum einen dadurch, dass nicht zu viel vom Gemüse entfernt wird, zum anderen dadurch, dass nicht nachgearbeitet werden muss, falls die Strunkentfernung nicht vollständig durchgeführt wurde.

Die Aufgabe konnte mittels der Merkmale der Patentansprüche gelöst werden.

Dabei betrifft die Erfindung einen Bohrer 1 zum Entfernen eines Strunks bei Gemüse, wobei der Bohrer 1 eine konische Form besitz und innen hohl ist. Der erfindungsgemäße Bohrer 1 besitzt mindestens zwei Schneideblätter 3, vorzugsweise drei Schneideblätter, mit Schneiden 4. Die Schneiden 4 können sich auf einer oder beiden Kanten der Schneideblätter 3 befinden. Insbesondere ist jedes der Schneideblätter 3 sowohl an der Zentrierspitze 2 als auch an der Bodenplatte 7 befestigt. Vorzugsweise sind die Schneideblätter 3 spiralförmig an der Bodenplatte 7 befestigt. Vorzugsweise besteht die Bodenplatte 7 aus Haltearmen 5 und einem Aufnahmestück 6. Dabei ist die Anzahl der Haltearme 5 abhängig von der Anzahl der Schneideblätter 3.

Vorzugsweise besteht der erfindungsgemäße Bohrer 1 aus Edelstahl, insbesondere aus einem für Lebensmittel geeigneten Edelstahl. Beispielsweise sind das Edelstähle nach den EN 10020 und 10027-2 mit den Werkstoff-Nr.: 1.4401, 14404 und 1.4571.

Als Material für den Bohrer 1 ist auch jedes andere Material möglich, das für Lebensmittel geeignet und zum Ausbohren eines Strunks stabil genug ist, beispielsweise Kunststoffe.

Die Erfindung betrifft auch die Verwendung des Bohrers 1 zum Entfernen eines Strunks bei Gemüse.

Die Funktionsweise des erfindungsgemäßen Bohrers ist dabei folgende.
Der erfindungsgemäße Bohrer wird für den automatisierten Entfernungsprozess des Strunks (der Sprossachse) von Strunkgemüsen, beispielsweise Kohlköpfen, verwendet. Die konische Form des Bohrers entspricht der Grundform des Strunks und gewährleistet damit den geringstmöglichen Verschnitt der anliegenden höherwertigen Kohlblätter. Der Bohrprozess erfolgt durch die Eigenrotation des Bohrers und dessen Vorschubbewegung in den offenen Stumpf des Strunks. Im Detail erfolgt eine trennende Schnittbewegung der Schneide in das Kohlmaterial, bei dem die spiral- bzw. helixartige Form eine längere Schneide und lokal kleine Schneidewinkel besitzt, wodurch Schneidkräfte und Verschleiß verringert werden. Der freie Raum zwischen den Schneidblättern und die Aussparungen der Bodenplatte des Krautbohrers erlauben es, die anfallende Kohlspäne von der Schneidstelle abführen zu können. Die Zentrierspitze des Bohrers stabilisiert die geradlinige Führung und reduziert die Vorschubkraft während des Bohrvorgangs. Dabei wird dortiges Kohlmaterial seitlich verdrängt und gelangt zu den Schneideblättern.
Die dargestellte Bauform des Bohrers erlaubt zudem eine Material reduzierte Fertigung.

Der erfindungsgemäße Bohrer besteht aus mindestens zwei Schneideblättern, welche spiralförmig bzw. helixartig und konisch in Vorschubrichtung in eine gemeinsame Zentrierspitze zulaufen. Die Schneideblätter sind im gleichen Winkel zueinander angeordnet und sind rückwärtig über eine gemeinsame Bodenplatte verbunden, welche an eine Bohrmaschine angeschlossen werden kann.
Die Größe des erfindungsgemäßen Bohrers ist variabel und kann nach Bedarf angepasst werden. Vorzugsweise wird für die Entfernung von Strünken von Kohlköpfen eine Bodenplatte mit einem Durchmesser im Bereich von 20 mm bis 90 mm verwendet. Die Länge des erfindungsgemäßen Bohrers wird dabei vorzugsweise aus dem Bereich von 30 mm 120 mm gewählt. Andere Abmessungen sind möglich und richten sich nach der Art und Größe des Strunkgemüses.

### Figuren

Figur 1 zeigt die Seitenansicht der Erfindung.
Figur 2 zeigt eine Draufsicht (von oben) der Erfindung.

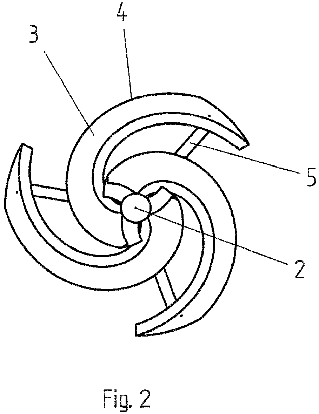

Figur 2 zeigt eine Draufsicht (von unten) der Erfindung.

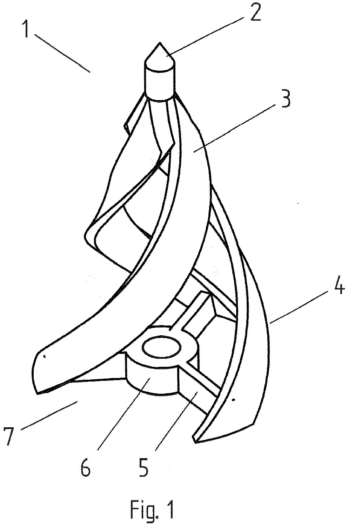

In Figur 1 wird die Seitenansicht der Erfindung gezeigt. Gezeigt wird ein Bohrer 1, der eine spiralförmige, zur Zentrierspitze 2 hin konisch zulaufende Form besitzt. Die Schneideblätter 3, von denen es in Fig. 1 drei Stück gibt, besitzen an ihren Kanten jeweils beidseitig eine Schneide 4. Die Schneideblätter 3 sind einmal an der Zentrierspitze 2 des Bohrers 1 befestigt und an ihrem unteren Ende an den Haltearmen 5, von denen es in Fig. 1 drei Stück gibt, welche im Aufnahmestück 6 münden. Die Schneideblätter sind im gleichen Winkel zueinander angeordnet Die Haltearme 5 und das Aufnahmestück 6 bilden zusammen die Bodenplatte 7.

Figur 2 wird eine Draufsicht von oben auf die Erfindung gezeigt. Gezeigt wird die Zentrierspitze 2, an der die drei Schneideblätter 3 mit den Schneiden 4 befestigt sind, welche spiralförmig von der Zentrierspitze 2 abgehen und an den Haltearmen 5 befestigt sind.

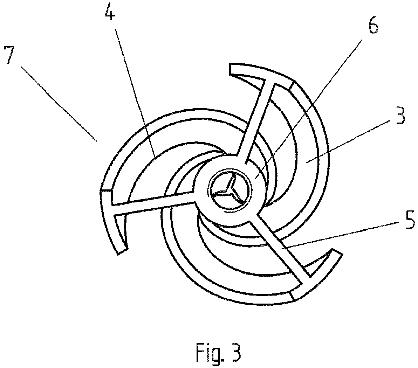

In Figur 3 wird die Draufsicht der Erfindung auf die Bodenplatte 7 gezeigt. Man sieht die drei spiralförmigen Schneideblätter 3 mit den Schneiden 4, die an den Haltearmen 5 befestigt sind. Auch sieht man das Aufnahmestück 6, das die drei Haltearme 5 miteinander verbindet.

**Bezugszeichenliste**

| | |
|---|---|
| 1 | Bohrer |
| 2 | Zentrierspitze |
| 3 | Schneideblatt |
| 4 | Schneide |
| 5 | Haltearm |
| 6 | Aufnahmestück |
| 7 | Bodenplatte |

### Beispiele

Zum besseren Verständnis der Erfindung wird ein konkretes Beispiel eines erfindungsgemäßen Bohrers beschrieben.

### Beispiel 1

Ein Bohrer mit einer Bodenplatte, einer Zentrierspitze und 3 Schneideblättern mit einseitiger Schneide, welche spiralförmig angeordnet sind, wurde für die Entfernung von Strünken in Weißkohl eingesetzt. An der Bodenplatte wurde eine Bohrmaschine befestigt. Der Durchmesser des Bohrers an der Bodenplatte betrug 70 mm. Die Länge des Bohrers betrug 100 mm.
Für den Bohrer wurde für Lebensmittel geeigneter Edelstahl verwendet.

Mit Hilfe der erfindungsgemäßen Einlage wurde eine elegante Möglichkeit gefunden, eine bessere Entfernung von Strünken in Gemüse und dadurch eine Kostersparnis bei der Verarbeitung des Gemüses zu gewährleisten.

## Patentansprüche

1. Bohrer (1) zum Entfernen eines Strunks bei Gemüse,
**dadurch gekennzeichnet, dass**
der Bohrer (1) eine konische Form besitzt und innen hohl ist.

2. Bohrer (1) nach Patentanspruch 1, **dadurch gekennzeichnet, dass** der Bohrer (1) mindestens zwei Schneideblätter (3) mit Schneiden (4) besitzt.

3. Bohrer (1) nach Patentanspruch 1 und/oder 2, **dadurch gekennzeichnet, dass** jedes der Schneideblätter (3) sowohl an der Zentrierspitze (2) als auch an der Bodenplatte (7) befestigt ist.

4. Bohrer (1) nach einem oder mehreren der Patentansprüche 1 bis 3, **dadurch gekennzeichnet, dass** die Schneideblätter (3) spiralförmig an den Haltearmen (5) der Bodenplatte (7) befestigt sind.

5. Bohrer (1) nach einem oder mehreren der Patentansprüche 1 bis 4, **dadurch gekennzeichnet, dass** die Bodenplatte (7) aus Haltearmen (5) und einem Aufnahmestück (6) besteht.

6. Bohrer (1) nach einem oder mehreren der Patentansprüche 1 bis 5, **dadurch gekennzeichnet, dass** der Bohrer (1) aus Edelstahl besteht.

7. Bohrer (1) nach Patentanspruch 6, **dadurch gekennzeichnet, dass** der Bohrer (1) aus einem für Lebensmittel geeigneten Edelstahl besteht.

8. Verwendung des Bohrers (1) nach Patentanspruch 1 zum Entfernen eines Strunks bei Gemüse.
